# EUROPÄISCHE PATENTSCHRIFT

(11) **EP 3 050 759 B1**
(45) Veröffentlichungstag und Bekanntmachung des Hinweises auf die Patenterteilung: **20.02.2019**
(21) Anmeldenummer: 16151701.6
(22) Anmeldetag: 18.01.2016
(51) Int. Cl.: B60R 19/56

(54) **UNTERFAHRSCHUTZEINRICHTUNG**
UNDERRUN PROTECTION DEVICE
DISPOSITIF DE PROTECTION ANTI-ENCASTREMENT

(30) Priorität: 27.01.2015 DE 102015201365
(43) Veröffentlichungstag der Anmeldung: 03.08.2016
(73) Patentinhaber: Franz Xaver Meiller Fahrzeug- und Maschinenfabrik-GmbH & Co KG, 80997 München (DE)
(72) Erfinder: MEISSNER, Uwe, 85560 Ebersberg (DE); DREXLER, Hubert, 82347 Bernried (DE)
(74) Vertreter: Tiesmeyer, Johannes

(56) Entgegenhaltungen:
- EP-A2- 1 001 091
- FR-A1- 2 785 028
- US-A1- 2003 165 356

## Beschreibung

Die vorliegende Erfindung betrifft eine Unterfahrschutzeinrichtung für ein Lastentransportfahrzeug gemäß dem Oberbegriff des Anspruchs 1.

Unterfahrschutzeinrichtungen für Lastentransportfahrzeuge sind im Stand der Technik gut bekannt und umfassen im Allgemeinen eine längliche, horizontal angeordnete Unterfahrschutzbarriere zur Sicherung eines heckseitigen Bereichs des Lastentransportfahrzeugs gegen das Auffahren bzw. Unterfahren durch ein anderes Fahrzeug. Die Unterfahrschutzbarriere stellt somit für ein auffahrendes Fahrzeug einen definierten Kollisionsbereich bereit, welcher die Kollosionskräfte in die Knautschzone des auffahrenden Fahrzeugs einleitet. Da die Unterfahrschutzbarriere jedoch in einigen Betriebszuständen des Lastentransportfahrzeugs hinderlich sein kann, beispielsweise beim Be- und Entladen oder bei einem Einsatz mit einem Straßenfertiger, welcher zum Antreiben der Hinterräder des Lastentransportfahrzeugs oder dessen Heck befahren wird, ist es bekannt, die Unterfahrschutzbarriere abnehmbar oder aus der Sicherungsstellung heraus in eine Freigabestellung verstellbar zu gestalten. Zwischen einer den zu sichernden Bereich sperrenden Sicherungsstellung und einer den Bereich freigebenden Freigabestellung bewegbare Unterfahrschutzeinrichtungen sind aus der DE 93 07 389 U1 und der DE 10 2005 031 147 A1 bekannt.

Diese Unterfahrschutzeinrichtungen umfassen eine Unterfahrschutzbarriere und eine Halterungsanordnung mit zwei in Längsrichtung der Unterfahrschutzbarriere voneinander beabstandet angeordneten Halterungseinrichtungen zur Befestigung der Unterfahrschutzbarriere am Heck des Fahrzeugs. Jede der Halterungseinrichtungen weist jeweils zwei durch ein Gelenk miteinander verbundene Halterungsschenkel auf, von denen jeweils ein erster Halterungsschenkel mit der Unterfahrschutzbarriere gelenkig verbunden ist und ein zweiter Halterungsschenkel an einem am Heck des Fahrzeugs zu befestigenden Montageträger gelenkig angebracht ist, so dass die Unterfahrschutzbarriere durch eine Gelenkbewegung der Halterungsschenkel zwischen der Sicherungsstellung und der Freigabestellung bewegbar ist.

Bei diesen Unterfahrschutzeinrichtungen tritt in der praktischen Benutzung das Problem auf, dass die Länge der Halterungsschenkel und der Mechanismus zu ihrer Betätigung technisch derartige Grenzen aufweisen, dass die Unterfahrschutzbarriere nur eine begrenzte Strecke unter und hinter dem Fahrzeugrahmen durch die Halterungsanordnung bewegt werden kann. Dadurch ist sie bei einigen Fahrzeugen unzureichend weit hinter und unter dem Fahrzeugrahmen in der Sicherungsstellung platziert. Dadurch besteht Gefahr, dass die Unterfahrschutzeinrichtung nicht den gesetzlichen Bestimmungen genügt und nicht in ausreichender Weise einem auffahrendem Fahrzeug einen definierten Kollisionsbereich bereitstellt.

Eine Unterfahrschutzeinrichtung entsprechend dem Oberbegriff des Anspruchs 1 ist aus der EP 1 001 091 A2 bekannt.

Vor diesem Hintergrund ist es Aufgabe der vorliegenden Erfindung, eine Unterfahrschutzeinrichtung der oben genannten Art bereitzustellen, welche eine Sicherungsstellung aufweist, die weiter hinter und unter dem Befestigungsort der Unterfahrschutzeinrichtung am Fahrzeug liegt, als dies im Stand der Technik der Fall ist.

Zur Lösung dieser Aufgabe wird gemäß der vorliegenden Erfindung eine Unterfahrschutzbarriere für ein Lastentransportfahrzeug gemäß Anspruch 1 bereitstellt. Vorteilhafte Ausgestaltungen sind Gegenstand der abhängigen Ansprüche.

Die erfindungsgemäße Unterfahrschutzeinrichtung für ein Lastentransportfahrzeug umfasst also eine längliche, normalerweise horizontal angeordnete Unterfahrschutzbarriere zur Sicherung eines heckseitigen Bereichs des Lastentransportfahrzeugs gegen das Auffahren bzw. Unterfahren durch ein anderes Fahrzeug und mindestens eine Halterungseinrichtung zur Befestigung der Unterfahrschutzbarriere am heckseitigen Ende des Fahrzeugrahmens oder ggf. am heckseitigen Ende eines rahmenfesten Aufbauteils des Lastentransportfahrzeugs, wobei die Halterungseinrichtung einen Verstellmechanismus in Form von mindestens einem Scherenverstellmechanismus umfassend zwei durch ein Gelenk verbundene Halterungsschenkel aufweist, so dass die Unterfahrschutzbarriere durch eine Gelenkbewegung der Halterungsschenkel des Scherenverstellmechanismus bewegbar ist, um die Unterfahrschutzbarriere zwischen einer den zu sichernden Bereich sperrenden Sicherungsstellung und einer den Bereich freigebenden Freigabestellung zu verstellen.

Darüber hinaus umfasst die Unterfahrschutzeinrichtung der vorliegenden Erfindung zusätzlich zu dem Scherenverstellmechanismus mindestens einen weiteren Verstellmechanismus zur Verstellung der Unterfahrschutzbarriere relativ zum Fahrzeugrahmen, so dass die Unterfahrschutzbarriere beim Einbringen in die Freigabestellung in platzsparender Weise nahe an das Fahrzeugheck heranführbar ist und in der Sicherungsstellung ausreichend weit hinter und unter dem Fahrzeugrahmen platziert ist. Dabei beinhaltet der mindestens eine weitere Verstellmechanismus einen Teleskopverstellmechanismus umfassend einen ersten relativ zum Fahrzeugrahmen und/oder relativ zu einem zweiten Armabschnitt des Teleskopverstellmechanismus in eine Auszugsstellung und eine Einzugsstellung teleskopisch bewegbaren Armabschnitt, so dass die Unterfahrschutzbarriere durch eine Teleskopbewegung des ersten und/oder zweiten Armabschnitts des Teleskopverstellmechanismus bewegbar ist, wobei der mindestens eine Scherenverstellmechanismus zusammen mit mindestens dem Teleskopverstellmechanismus mechanisch zwischen dem Fahrzeugrahmen und der Unterfahrschutzbarriere in Reihe geschaltet ist, so dass bei einer maximalen Verstellung aller Verstellmechanismen die Unterfahrschutzbarriere in der Sicherungsstellung platziert ist.

Durch dieses flexible Vorsehen von mehreren Verstellmechanismen lässt sich trotz der begrenzten Dimensionen eines einzelnen Verstellmechanismus eine Sicherungsstellung realisieren, bei der die Unterfahrschutzbarriere ausreichend weit hinter und unter dem Fahrzeugrahmen bzw. ausreichend nah dem Boden und ausreichend weit hinter dem Fahrzeug platziert ist.

Die Unterfahrschutzbarriere ist dabei bevorzugt an dem Teleskopverstellmechanismus oder dem Scherenverstellmechanismus der Halterungseinrichtung gehalten. Dies bedeutet, dass die Anordnung der Verstellmechanismen und insbesondere welcher Verstellmechanismus letztlich die Unterfahrschutzbarriere direkt trägt, nicht fest vorgegeben ist, sondern stattdessen flexibel anhand der Anforderungen gewählt werden kann.

Da der mindestens eine Scherenverstellmechanismus zusammen mit dem mindestens einem Teleskopverstellmechanismus mechanisch zwischen dem Fahrzeugrahmen und der Unterfahrschutzbarriere in Reihe geschaltet ist, so dass bei einer maximalen Verstellung aller Verstellmechanismen die Unterfahrschutzbarriere in der Sicherungsstellung platziert ist, addieren sich dadurch die Weiten der Verstellmechanismen, um die der einzelne Verstellmechanismus die Unterfahrschutzbarriere hinter und unter dem Fahrzeugrahmen bewegen kann, so dass sich die Unterfahrschutzbarriere erheblich weiter hinter und unter dem Fahrzeugrahmen anordnen lässt. Damit erlaubt die Erfindung bei bekannten Anforderungen, insbesondere bei bekannten gesetzlichen Vorschriften, durch geeignete Kombination der Verstellmechanismen die entsprechenden Anforderungen zu erfüllen.

Ferner werden bevorzugt die Verstellmechanismen mechanisch zwischen dem Fahrzeugrahmen und der Unterfahrschutzbarriere in Reihe geschaltet, so dass bei einer minimalen Verstellung aller Verstellmechanismen die Unterfahrschutzbarriere in der Freigabestellung platziert ist. Durch eine solche Anordnung kann die Unterfahrschutzbarriere trotz der Möglichkeit, sie weit hinter und unter dem Fahrzeugrahmen zu platzieren, in der Freigabestellung besonders nah am Fahrzeugrahmen platziert werden, so dass in der Freigabestellung die Unterfahrschutzbarriere nicht mehr hindert und insbesondere nicht mehr unterhalb des Fahrzeugrahmens ist.

Bevorzugt weist die Unterfahrschutzeinrichtung mehrere Halterungseinrichtungen auf, denn durch die Befestigung der Unterfahrschutzbarriere an mehreren Halterungseinrichtungen hindert die Unterfahrschutzbarriere ein auffahrendes Fahrzeugs noch besser am Unterfahren des Lastentransportfahrzeugs. Dabei können insbesondere zwei zur Mittelachse des Fahrzeugs symmetrische Halterungseinrichtungen vorgesehen sein, denn durch zwei Halterungseinrichtungen ist die Unterfahrschutzbarriere ausreichend stabilisiert und gleichzeitig können zwei Halterungseinrichtungen leicht am Fahrzeugrahmen befestigt werden, ohne sich gegenseitig zu behindern.

Dabei kann insbesondere vorgesehen sein, dass zwischen jeweils zwei symmetrischen Verstellmechanismen von zwei symmetrischen Halterungseinrichtungen eine zur Mittelachse symmetrische oder nicht-symmetrische Doppelbetätigungsvorrichtung zur manuellen, maschinellen und/oder automatischen Betätigung, insbesondere parallelen Betätigung beider symmetrischer Verstellmechanismen angeordnet ist. Dadurch lässt sich das Ein- und Ausfahren der Unterfahrschutzbarriere in gleichmäßiger Weise durchführen.

Ferner kann die Halterungsvorrichtung für einige oder alle ihrer Verstellmechanismen eine oder mehrere Betätigungsvorrichtungen zur manuellen, maschinellen und/oder automatischen Betätigung des jeweiligen, mehrerer oder aller Verstellmechanismen aufweisen. Dies erleichtert bei Halterungsvorrichtungen mit mehreren Verstellmechanismen eine aufeinander abgestimmte Betätigung der Verstellmechanismen, so dass die Unterfahrschutzbarriere in gewünschter Weise in die Sicherungsstellung und/oder in die Freigabestellung bewegt werden kann.

Ferner kann eine Steuerung zur Betätigung mehrerer Betätigungsvorrichtungen und/oder Doppelbetätigungsvorrichtungen vorgesehen sein. Eine solche betätigt bevorzugt gleichzeitig alle Betätigungsvorrichtungen einer Halterungsvorrichtung und/oder alle Doppelbetätigungsvorrichtungen. Die Steuerung kann dabei auch eine Fernsteuerung sein.

Ferner kann die Steuerung bzw. eine damit verbundene Speicher- und/oder Programmvorrichtung einen oder mehrere durch die Steuerung aktivierbare Programmabläufe aufweisen, so dass bei Auswahl eines bestimmten Programmablaufs die Betätigungsvorrichtungen und Doppelbetätigungsvorrichtungen in aufeinander abgestimmter Weise zeitlich überlappend und/oder nicht überlappend betätigt werden, um insbesondere die Unterfahrschutzbarriere zwischen der den zu sichernden Bereich sperrenden Sicherungsstellung und der den Bereich freigebenden Freigabestellung zu verstellen. Durch einen solch festgelegten Betätigungs- und damit Bewegungsablauf der Unterfahrschutzbarriere lässt sich das Risiko von Fehlbedienungen und oder Unfällen verringern.

Ferner kann auch vorgesehen sein, dass der Scherenverstellmechanismus und der Teleskopverstellmechanismus separat betätigt und arretiert werden können, so dass die Unterfahrschutzeinrichtung in andere Stellungen als die Sicherungsstellung und die Freigabestellung verfahren und an diesen arretiert werden kann. Dadurch lassen sich mit einer Konstruktion mehrere verschiedene Anforderungen hinsichtlich der Platzierung der Unterfahrschutzbarriere verwirklichen. Ein Beispiel für solche Anforderungen könnten in unterschiedlichen Ländern unterschiedliche gesetzliche Vorschriften hinsichtlich der Platzierung der Unterfahrschutzbarriere sein.

Die vorliegende Erfindung wird nachfolgend anhand eines bevorzugten Ausführungsbeispiels unter Bezugnahme auf die beigefügten Zeichnungen näher erläutert. Dabei sind alle offenbarten Merkmale, die in Kombination mit den Merkmalen des Anspruchs 1 technisch realisiert werden können, als Teil der Erfindung anzusehen. Ausführungen, die entgegen Anspruch 1 keine in Reihe geschalteten Scherenverstellmechanismen und Teleskopverstellmechanismen aufweisen sind nicht zur Erfindung gehörende Ausführungen. Es zeigen:
Figur 1a - Figur 1c schematische Draufsichten eines bei der Erfindung verwendeten Scherenverstellmechanismus,
Figur 1d und Figur 1e schematische Draufsichten auf zwei symmetrisch angeordnete Scherenverstellmechanismen aus Figur 1a - Figur 1c,
Figur 2a - Figur 2d schematische Drauf- bzw. Seitenansichten eines bei der Erfindung verwendbaren Teleskopverstellmechanismus,
Figur 2e und Figur 2f schematische Draufsichten von zwei symmetrisch angeordneten Teleskopverstellmechanismen aus Figur 2a - Figur 2d,
Figur 3a - Figur 3c schematische Seitenansichten eines bei der Erfindung zusätzlich verwendbaren Schwenkverstellmechanismus,
Figur 4 eine schematische Draufsicht einer erfindungsgemäßen Unterfahrschutzeinrichtung für ein Lastentransportfahrzeug, die einen Scherenverstellmechanismus und einen Teleskopverstellmechanismus nutzt, wobei die Unterfahrschutzbarriere in der Sicherungsstellung ist,
Figur 5 eine schematische Draufsicht der erfindungsgemäßen Unterfahrschutzeinrichtung aus Figur 4, wobei die Unterfahrschutzbarriere in der Freigabestellung ist,
Figur 6 eine schematische Draufsicht einer erfindungsgemäßen Unterfahrschutzeinrichtung, die einen Schwenkverstellmechanismus, einen Scherenverstellmechanismus und einen Teleskopverstellmechanismus nutzt, wobei die Unterfahrschutzbarriere in der Sicherungsstellung ist,
Figur 7 eine schematische Draufsicht der erfindungsgemäßen Unterfahrschutzeinrichtung aus Figur 6, wobei die Unterfahrschutzbarriere in der Freigabestellung ist,
Figur 8 eine schematische Draufsicht einer erfindungsgemäßen Unterfahrschutzeinrichtung, die zwei Scherenverstellmechanismen und einen Teleskopverstellmechanismus in direkter Verbindung nutzt, wobei die Unterfahrschutzbarriere in der Freigabestellung ist,
Figur 9 eine schematische Draufsicht einer erfindungsgemäßen Unterfahrschutzeinrichtung, die einen Scherenverstellmechanismus und einen Teleskopverstellmechanismus in integrierter Weise nutzt, wobei die Unterfahrschutzbarriere in der Sicherungsstellung ist,
Figur 10 eine schematische Draufsicht der erfindungsgemäßen Unterfahrschutzeinrichtung aus Figur 9, wobei die Unterfahrschutzbarriere in der Freigabestellung ist,
Figur 11 eine schematische Draufsicht einer erfindungsgemäßen Unterfahrschutzeinrichtung, die einen Scherenverstellmechanismus mit beweglicher Verankerung und einen Teleskopverstellmechanismus in integrativer Weise nutzt, wobei die Unterfahrschutzbarriere in der Freigabestellung ist, und
Figur 12 eine schematische Draufsicht einer erfindungsgemäßen Unterfahrschutzeinrichtung, die einen Schwenkverstellmechanismus, einen Scherenverstellmechanismus und einen Teleskopverstellmechanismus in integrativer Weise nutzt, wobei die Unterfahrschutzbarriere in der Freigabestellung ist.

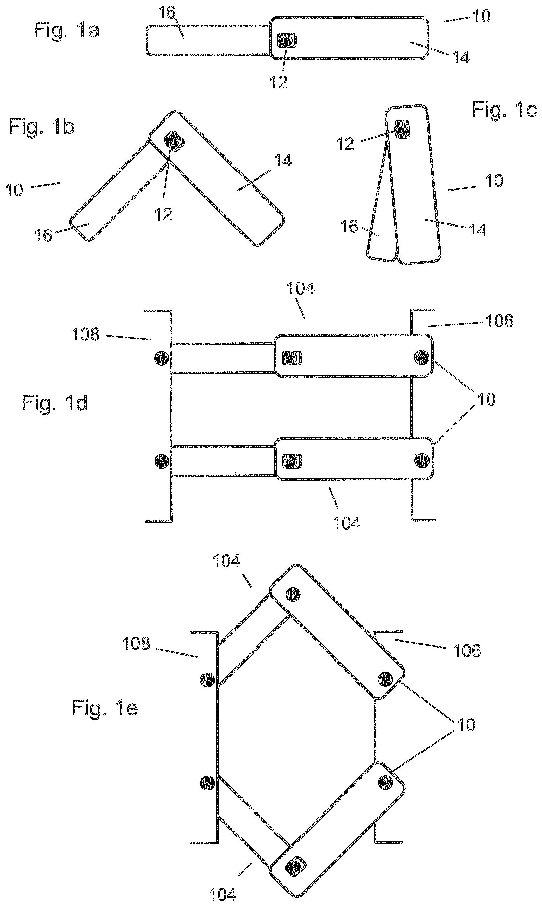

Figur 1 - Figur 3 zeigen schematisch Verstellmechanismen 10, 20, 30 bzw. symmetrisch angeordnete Verstellmechanismen 10, 20, 30, wie sie bei der erfindungsgemäßen Unterfahrschutzeinrichtung 100 für ein Laststransportfahrzeug verwendet werden können.

In Figur 1a - Figur 1c ist schematisch ein Beispiel für einen Scherenverstellmechanismus 10 gezeigt, wobei ein solcher oder vergleichbarer Scherenverstellmechanismus 10 Teil jeder Ausführungsform bzw. jedes Ausführungsbeispiels der erfindungsgemäßen Unterfahrschutzeinrichtung 100 ist.

Wie in Figur 1a - 1c gezeigt, weist der Scherenverstellmechanismus 10 zwei durch ein Gelenk 12 verbundene Halterungsschenkel 14, 16 auf. Diese können sich um das Gelenk 12 herum zueinander hin bewegen, bzw. um das Gelenk 12 als Drehachse herum zueinander drehen, so dass die Distanz zwischen den beiden von dem Gelenk 12 entfernten Enden der Halterungsschenkel 14, 16 verringert wird. Dadurch wird, wenn der Scherenverstellmechanismus 10 Teil einer erfindungsgemäßen Unterfahrschutzeinrichtung 100 ist, der Abstand zwischen einer Unterfahrschutzbarriere 102 zu einem heckseitigen Ende des Fahrzeugrahmens verringert, so dass durch Betätigung des Scherenverstellmechanismus 10 die Unterfahrschutzbarriere 102 von der Sicherungsstellung weg hin zu der Freigabestellung bewegt wird. Wie in Figur 1d und 1e gezeigt, können zwei symmetrisch angeordnete Scherenverstellmechanismen 10 Teil zweier symmetrischer Halterungseinrichtungen 104 sein. Wie gezeigt, können die Scherenverstellmechanismen 10 beidseitig an die Unterfahrschutzbarriere 102, den Fahrzeugrahmen 106 oder von den Halterungseinrichtungen 104 gemeinsam ausgebildete Zwischenstücke 108 angelenkt sein. An dieses Zwischenstück 108 schließen sich dann erfindungsgemäß weitere Verstellmechanismen 10, 20, 30 der Halterungseinrichtungen 104 der erfindungsgemäßen Unterfahrschutzeinrichtungen 100 an.

Dabei kann eine Verstellung zwischen Sicherungsstellung und Freigabestellung durch symmetrische Betätigung der beiden symmetrischen Scherenverstellmechanismen 10 der Halterungseinrichtungen 104 unterstützt werden. Anzumerken ist, dass die Bewegung nicht zwingend symmetrisch erfolgen muss, beispielsweise könnte der obere Scherenverstellmechanismus in Figur 1e beim Zusammenziehen auch nach unten ausklappen.

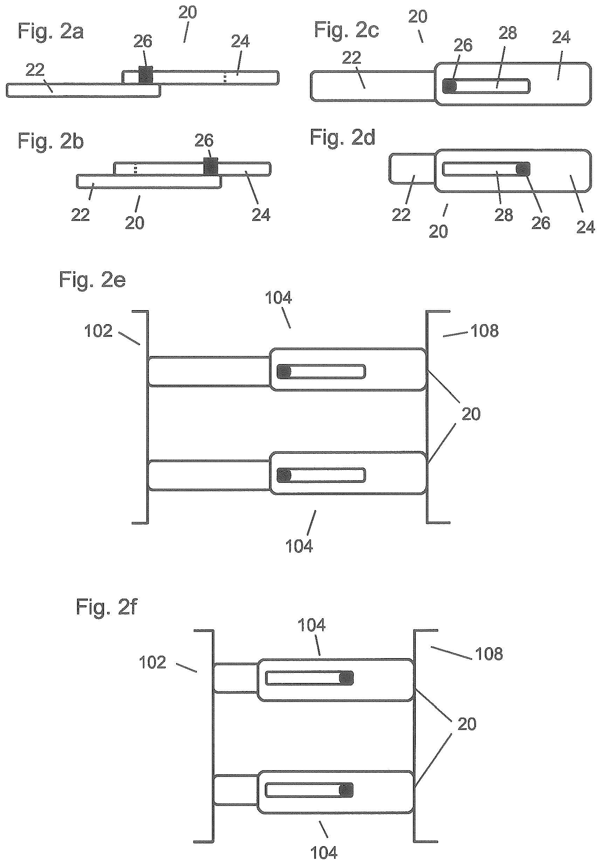

Ein Verstellmechanismus 20, der bei der erfindungsgemäßen Unterfahrschutzeinrichtung 100 als ein möglicher Verstellmechanismus 10, 20, 30 verwendbar ist, ist der in Figur 2a - Figur 2d gezeigte Teleskopverstellmechanismus. Dieser umfasst einen ersten Armabschnitt 22 und einen zweiten Armabschnitt 24, wobei der erste Armabschnitt 22 teleskopisch gegenüber dem zweiten Armabschnitt 24 beweglich ist. Damit ist, da entweder der erste Armabschnitt 22 oder der zweite Armabschnitt 24 zum Fahrzeugrahmen 106 hin mit diesem direkt oder indirekt verbunden ist, der andere Armabschnitt teleskopisch gegenüber dem Fahrzeugrahmen bewegbar. In der gezeigten konkreten Ausführungsform ist die teleskopische Verschiebbarkeit durch einen Zapfen 26 an dem ersten Armabschnitt 22 und der Führung dieses Zapfens 26 in einem Langloch 28 des zweiten Armabschnitts 24 realisiert. Selbstverständlich sind auch andere Möglichkeiten zur teleskopischen Verbindung der beiden Armabschnitte 22, 24 im Stand der Technik bekannt. Diese können ebenfalls für die vorliegende Erfindung genutzt werden.

Ähnlich wie die symmetrisch angeordneten Scherenverstellmechanismen 10 der Halterungseinrichtungen 104 in Figur 1d und Figur 1e können auch zwei Teleskopverstellmechanismen 20 symmetrisch als Teile von zwei Halterungseinrichtungen 104 angeordnet werden, beispielsweise zwischen einem Zwischenstück 108 und einer Unterfahrschutzbarriere 102. Dadurch können die Teleskopverstellmechanismen 20 mit den anderseitig an dem Zwischenteil 108 angebrachten Verstellmechanismen, beispielsweise den Scherenverstellmechanismen 10, zusammenwirken, um einen besonders großen Verfahrweg zwischen Sicherungsstellung und Freigabestellung zu realisieren, womit die Unterfahrschutzbarriere 102 in der Sicherungsstellung sehr weit hinter und unterhalb des Fahrzeugrahmens angeordnet ist.

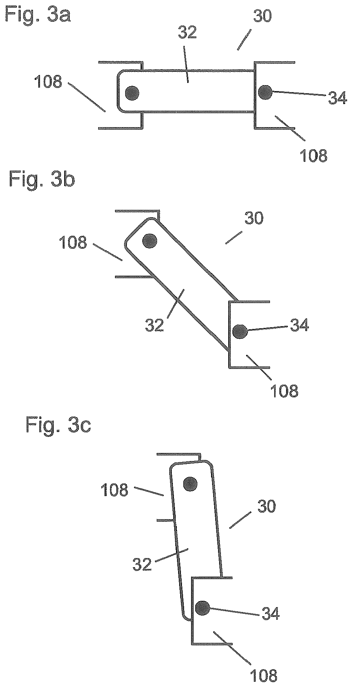

Ein weiterer Verstellmechanismus 30, der bei vorliegender Erfindung Teil der erfindungsgemäßen Unterfahrschutzeinrichtung 100 sein kann, ist der in Figur 3a - Figur 3b gezeigte Schwenkverstellmechanismus 30. Dieser umfasst einen schwenkbaren Schwenkarm 32, der beispielsweise an einer horizontalen Schwenkachse 34 beispielsweise an einem Zwischenstück 108 angelenkt ist. Durch Schwenken des Schwenkarms 32 um diese Schwenkachse 34 wird das am anderen Ende des Schwenkarms 32 befestigte Objekt, beispielsweise ein weiteres Zwischenstück 108, bewegt, wodurch insgesamt die letztlich mit diesem weiteren Zwischenstück 108 verbundene Unterfahrschutzbarriere 102 näher an den Fahrzeugrahmen heranbewegt wird bzw. weiter von dem Fahrzeugrahmen weg bewegt wird.

Allen Verstellmechanismen 10, 20, 30 ist dabei zueigen, dass sie jeweils eigene oder gemeinsame Arretiermittel bzw -möglichkeiten aufweisen, die jedoch nicht näher in den Figuren gezeigt sind. Ferner kann die Betätigung der Verstellmechanismen jeweils einzeln bzw. gemeinsam manuell, maschinell und/oder automatisch erfolgen. Dementsprechend kann die erfindungsgemäße Unterfahrschutzeinrichtung 100 noch an den Verstellmechanismen 10, 20, 30 und/oder an den Zwischenstücken 108 und/oder an dem Fahrzeugrahmen und/oder an der Unterfahrschutzbarriere 102 angeordnete Antriebsmittel umfassen, die die maschinelle und/oder automatische Verstellung der Verstellmechanismen bewirken.

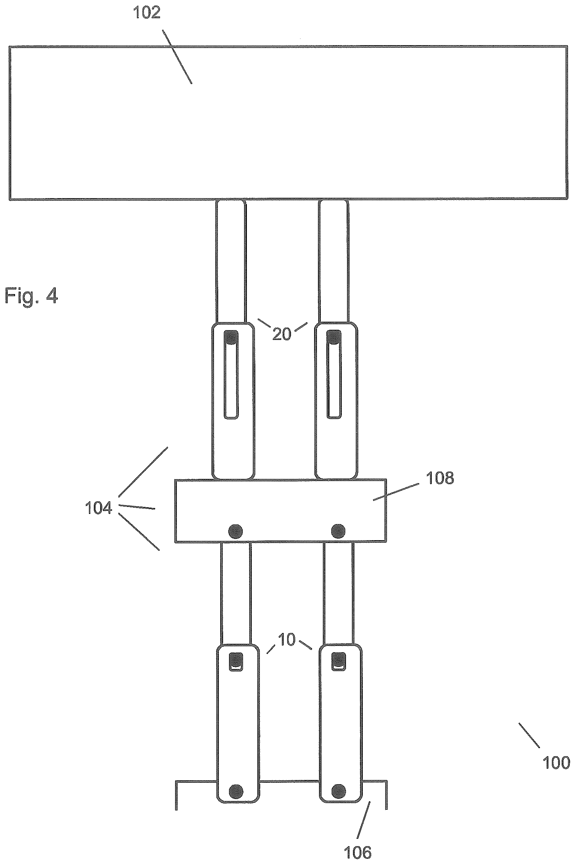

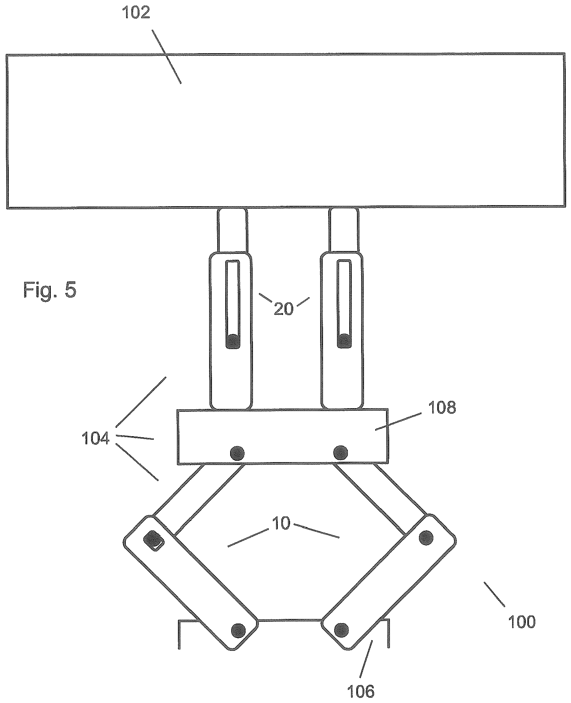

Wie in Figur 4 gezeigt, kann eine erfindungsgemäße Unterfahrschutzeinrichtung 100 zwei Halterungseinrichtungen 104 aufweisen, die jeweils einen Scherenverstellmechanismus 10 und einen Teleskopverstellmechanismus 20 aufweisen. Über ein gemeinsam ausgebildetes Zwischenstück 108 der Halterungseinrichtung 104 sind die beiden Teleskopverstellmechanismen 20 und die beiden Scherenverstellmechanismen 10 miteinander mechanisch verbunden. Die Unterfahrschutzbarriere 102 wird durch die Teleskopverstellmechanismen 20 getragen. Am anderen Ende der erfindungsgemäßen Unterfahrschutzeinrichtung 100 sind die Scherenverstellmechanismen 10 entweder mit dem Fahrzeugrahmen 106 oder mit einer Halterungsvorrichtung 106, die an dem Fahrzeugrahmen befestigt ist, verbunden. Dadurch addieren sich, wie in Figur 5 gezeigt, die Verstellwege der Teleskopverstellmechanismen 20 und der Scherenverstellmechanismen 10, so dass die Unterfahrschutzbarriere 102 zum Verbringen in die Sicherungsstellung erheblich weiter von dem Fahrzeugrahmen 106 und damit erheblich weiter hinter und unterhalb des Fahrzeugrahmens 106 verbracht werden kann.

Dabei werden die Verstellmechanismen 10, 20 am Fahrzeugrahmen 106, am Zwischenstück 108, und an der Unterfahrschutzbarriere 102 mit einem solchen Winkel jeweils zueinander und den anderen Bauteilen angebracht, dass sich die Unterfahrschutzbarriere 102 in geeigneter Weise schräg nach hinten von dem Fahrzeugrahmen weg bewegt, so dass sie in der Freigabestellung nahe an dem Fahrzeugrahmen ist und in der Sicherungsstellung an der gewünschten Position hinter und unter dem Fahrzeugrahmen 106.

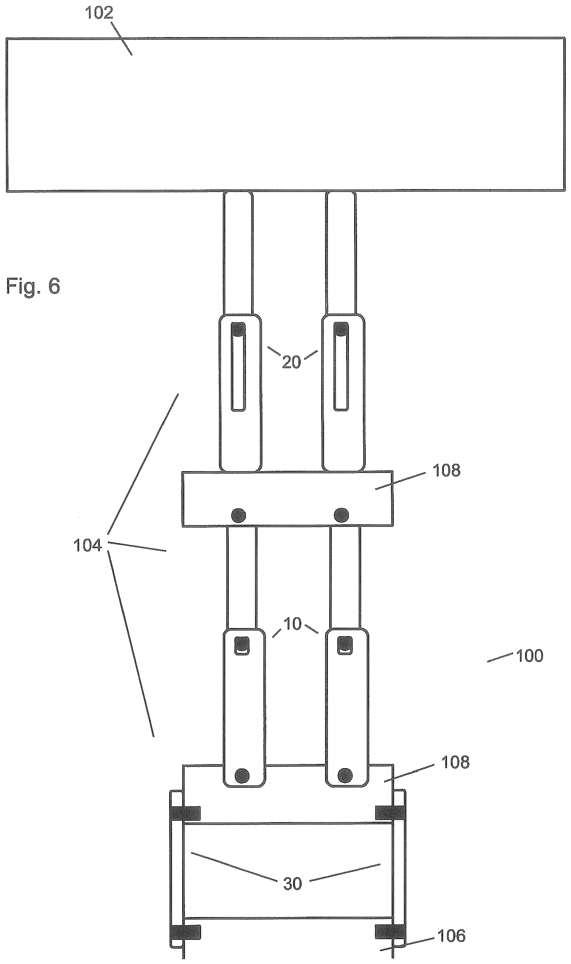

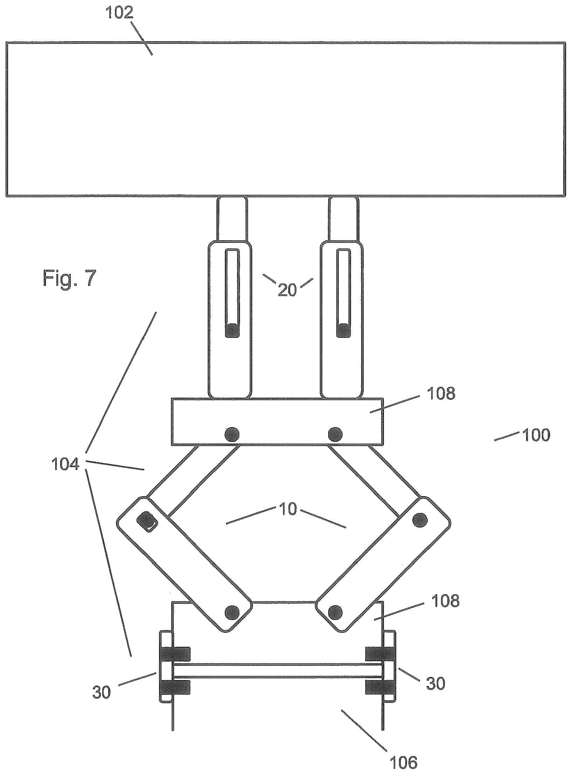

Wie in Figur 6 gezeigt, kann eine Halterungseinrichtung 104 der erfindungsgemäßen Unterfahrschutzeinrichtung 100 auch noch einen weiteren Verstellmechanismus 30, beispielsweise einen Schwenkverstellmechanismus 30, umfassen. Wie in an Figur 6 und Figur 7 ersichtlich, vergrößert sich damit der gesamte Verstellweg, um den die Unterfahrschutzbarriere 102 von dem Fahrzeugrahmen 106 entfernt werden kann, so dass auch eine weit vom Fahrzeugrahmen 106 entfernte Sicherungsstellung möglich ist.

Vorteilhaft an der Verwendung eines Schwenkverstellmechanismuses 30 ist, dass dieser durch das Hoch- und Runterklappen relativ zum Fahrzeugrahmen 106 dazu beitragen kann, eine Erstreckung der gesamten Unterfahrschutzeinrichtung 100 im richtigen Winkel relativ zum Fahrzeugrahmen 106 zu realisieren.

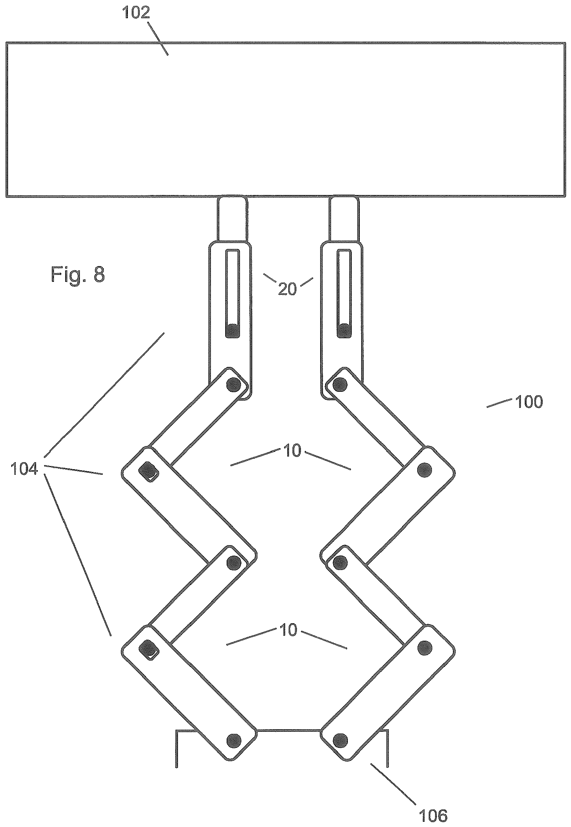

Wie in Figur 8 gezeigt, können Halterungseinrichtungen 104 einer erfindungsgemäßen Unterfahrschutzeinrichtung 100 auch mehrere Verstellmechanismen 10, 20, 30 des gleichen Typs umfassen, beispielsweise mehrere Scherenverstellmechanismen 10. Ferner können die Verstellmechanismen wie gezeigt auch ohne Zwischenstücke 108 aneinander angebracht werden. Alternativ könnten auch zwischen den jeweiligen Verstellmechanismen 10, 20, 30 der jeweiligen Halterungseinrichtung 104 Einzelverbindungsstücke vorgesehen sein, die nicht mit den Einzelverbindungsstücken der anderen Halterungseinrichtung 104 verbunden sind.

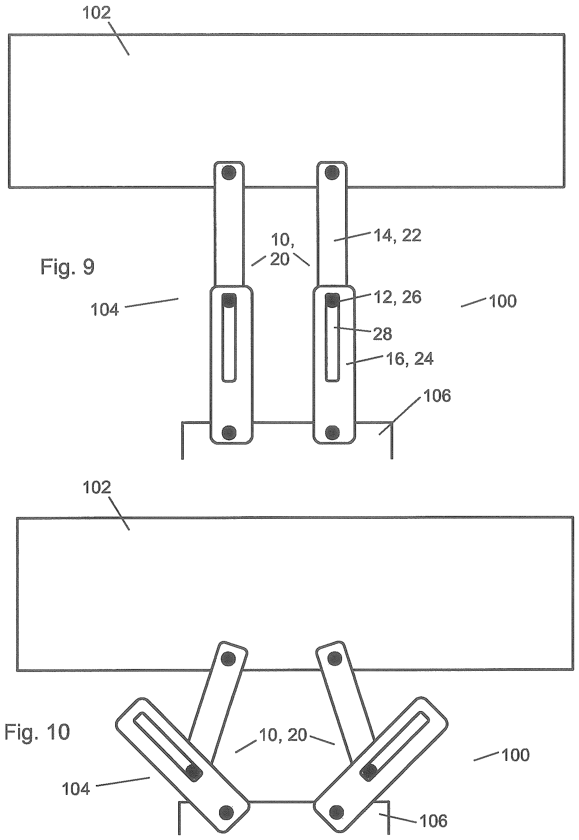

Wie in Figuren 9 und 10 gezeigt, können mehrere Verstellmechanismen 10, 20, 30 auch kombiniert bzw. integrativ verwendet werden. Beispielsweise können ein Scherenverstellmechanismus 10 und ein Teleskopverstellmechanismus 20 dadurch integrativ verbunden werden, indem ein Halterungsschenkel 16 eines Scherenverstellmechanismus 10 ein Langloch 28 ausbildet und so als zweiter Armabschnitt 24 eines Teleskopverstellmechanismus 20 dient. In diesem Fall sind Scherenverstellmechanismus 10 und Teleskopverstellmechanismus 20 sozusagen ein Verstellmechanismus 10, 20. Dieses ist dann besonders vorteilhaft, wenn Halterungsschenkel 14, 16 bzw. Armabschnitte 22, 24 eine erheblich unterschiedliche Länge aufweisen, denn dann kann, wie in Figur 10 angedeutet ist, der eine Halterungsschenkel 16 bzw. Armabschnitt 24 seitlich weg klappen und der Abstand zwischen den sich anfügenden Zwischenstücken 108 bzw. der Unterfahrschutzbarriere 102 bzw. dem Fahrzeugrahmen wird im Wesentlichen durch die Länge des anderen Halterungsschenkels 14 bzw. des anderen Armabschnitts 22 bestimmt.

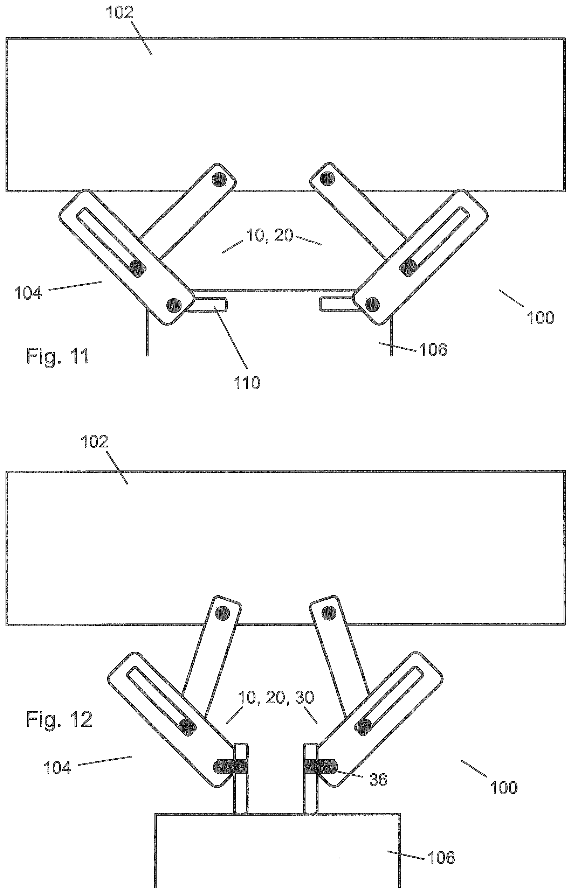

Wie in Figur 11 gezeigt, können auch die Verbindungen mit den Zwischenstücken 108 bzw. dem Fahrzeugrahmen 106 bzw. der Unterfahrschutzbarriere 102 nicht nur als ortsfeste Achsen oder Befestigungspunkte vorgesehen sein, sondern ebenfalls durch Langlöcher 110 als bewegliche Befestigungspunkte ausgebildet sein, was einen zusätzlichen Freiheitsgrad beim Entwurf der erfindungsgemäßen Unterfahrschutzeinrichtung 100 schafft. Die Langlöcher 110 können dabei in der Unterfahrschutzbarriere 102, in einem Zwischenstück 108, in dem Fahrzeugrahmen 106 und/oder in einer Halterungsvorrichtung 106, die an dem Fahrzeugrahmen befestigt ist, ausgebildet sein. Wie in Figur 12 gezeigt, lassen sich Scherenverstellmechanismus 10, Teleskopverstellmechanismus 20 und Schwenkverstellmechanismus 30 in einem einzigen Verstellmechanismus 10, 20, 30 integrieren. Dafür muss der Schwenkverstellmechanismus 30 mit dem benachbarten Verstellmechanismus 10, 20 über ein geeignetes Gelenk, insbesondere ein Kugelgelenk 36, in geeigneter Weise verbunden werden, so dass einerseits die Drehbewegung in der Bildebene als auch die Schwenkbewegung aus der Bildebene heraus bzw. in die Bildebene hinein über diese Gelenkverbindung 36 miteinander zusammenwirken können.

Es ist ferner darauf hinzuweisen, dass die gezeigten Kombinationen von Verstellmechanismen 10, 20, 30 nur beispielhaft sind, so dass eine beliebige Kombination von Scherenverstellmechanismen 10, Teleskopverstellmechanismen 20 und Schwenkverstellmechanismen 30 mit mindestens einem Scherenverstellmechanismus 10 in der hier beschriebenen Weise eine Ausführungsform der vorliegenden Erfindung ist.

## Patentansprüche

1. Unterfahrschutzeinrichtung (100) für ein Lastentransportfahrzeug, umfassend
- eine längliche, normalerweise horizontal angeordnete Unterfahrschutzbarriere (102) zur Sicherung eines heckseitigen Bereichs des Lastentransportfahrzeugs gegen das Auffahren bzw. Unterfahren durch ein anderes Fahrzeug, und
- mindestens eine Halterungseinrichtung (104) zur Befestigung der Unterfahrschutzbarriere am heckseitigen Ende des Fahrzeugrahmens (106) oder ggf. am heckseitigen Ende eines rahmenfesten Aufbauteils des Lastentransportfahrzeugs,
wobei die Halterungseinrichtung (104) einen Verstellmechanismus (10, 20) in Form von mindestens einem Scherenverstellmechanismus (10) umfassend zwei durch ein Gelenk (12) verbundene Halterungsschenkel (14, 16) aufweist, so dass die Unterfahrschutzbarriere (102) durch eine Gelenkbewegung der Halterungsschenkel (14, 16) des Scherenverstellmechanismus (10) bewegbar ist, um die Unterfahrschutzbarriere (102) zwischen einer den zu sichernden Bereich sperrenden Sicherungsstellung und einer den Bereich freigebenden Freigabestellung zu verstellen, wobei die Halterungseinrichtung (104) zusätzlich zu dem Scherenverstellmechanismus (10) mindestens einen weiteren Verstellmechanismus (20) zur Verstellung der Unterfahrschutzbarriere (102) relativ zum Fahrzeugrahmen (106) bietet, derart, dass die Unterfahrschutzbarriere (102) beim Einbringen in die Freigabestellung in platzsparender Weise nahe an das Fahrzeugheck heranführbar ist, wobei der mindestens eine weitere Verstellmechanismus (20) einen Teleskopverstellmechanismus (20) beinhaltet umfassend einen ersten relativ zum Fahrzeugrahmen und/oder relativ zu einem zweiten Armabschnitt (24) des Teleskopverstellmechanismus (20) in eine Auszugsstellung und eine Einzugsstellung teleskopisch bewegbaren Armabschnitt (22), so dass die Unterfahrschutzbarriere (102) durch eine Teleskopbewegung des ersten und/oder zweiten Armabschnitts (22, 24) des Teleskopverstellmechanismus (20) bewegbar ist, **dadurch gekennzeichnet, dass** der mindestens eine Scherenverstellmechanismus (10) zusammen mit mindestens dem Teleskopverstellmechanismus (20) mechanisch zwischen dem Fahrzeugrahmen (106) und der Unterfahrschutzbarriere (102) in Reihe geschaltet ist, so dass bei einer maximalen Verstellung aller Verstellmechanismen (10, 20) die Unterfahrschutzbarriere (102) in der Sicherungsstellung platziert ist.

2. Unterfahrschutzeinrichtung (100) nach Anspruch 1, **dadurch gekennzeichnet, dass** die Unterfahrschutzbarriere (102) an einem Teleskopverstellmechanismus (20) der Halterungseinrichtung (104) oder einem Scherenverstellmechanismus (10) der Halterungseinrichtung (104) gehalten wird.

3. Unterfahrschutzeinrichtung (100) nach einem der vorhergehenden Ansprüche, **dadurch gekennzeichnet, dass** der mindestens eine Scherenverstellmechanismus (10) zusammen mit dem Teleskopverstellmechanismus (20) mechanisch zwischen dem Fahrzeugrahmen (106) und der Unterfahrschutzbarriere (102) in Reihe geschaltet ist, so dass bei einer minimalen Verstellung aller Verstellmechanismen (10, 20) die Unterfahrschutzbarriere (102) in der Freigabestellung platziert ist.

4. Unterfahrschutzeinrichtung (100) nach einem der vorhergehenden Ansprüche, **dadurch gekennzeichnet, dass** zur Mittelachse des Fahrzeugs in Fahrtrichtung symmetrische Halterungseinrichtungen (104), insbesondere zwei symmetrische Halterungseinrichtungen (104) vorgesehen sind.

5. Unterfahrschutzeinrichtung (100) nach Anspruch 4, **dadurch gekennzeichnet, dass** zwischen jeweils zwei symmetrischen Verstellmechanismen (10, 20) von zwei symmetrischen Halterungseinrichtungen (104) eine zur Mittelachse symmetrische oder nicht-symmetrische Doppelbetätigungsvorrichtung zur manuellen, maschinellen und/oder automatischen Betätigung, insbesondere parallelen Betätigung beider symmetrischer Verstellmechanismen (10, 20) angeordnet ist.

6. Unterfahrschutzeinrichtung (100) nach einem der vorhergehenden Ansprüche, **dadurch gekennzeichnet, dass** die Halterungsvorrichtung (104) für einige oder alle ihrer Verstellmechanismen (10, 20) eine oder mehrere Betätigungsvorrichtungen zur manuellen, maschinellen und/oder automatischen Betätigung des jeweiligen, mehrerer oder aller Verstellmechanismen (10, 20) aufweisen.

7. Unterfahrschutzeinrichtung (100) nach Anspruch 5 oder 6, **dadurch gekennzeichnet, dass** eine Steuerung zur Betätigung mehrerer Betätigungsvorrichtungen und/oder Doppelbetätigungsvorrichtungen vorgesehen ist, bevorzugt zur gleichzeitigen Betätigung aller Betätigungsvorrichtungen einer Halterungsvorrichtung (104) und/oder aller Doppelbetätigungsvorrichtungen, wobei die Steuerung bevorzugt einen oder mehrere durch die Steuerung aktivierbare Programmabläufe aufweist, so dass bei Auswahl eines bestimmten Programmablaufs die Betätigungsvorrichtungen und Doppelbetätigungsvorrichtungen in aufeinander abgestimmter Weise zeitlich überlappend und/oder nicht überlappend betätigt werden, um insbesondere die Unterfahrschutzbarriere (102) zwischen der den zu sichernden Bereich sperrenden Sicherungsstellung und der den Bereich freigebenden Freigabestellung zu verstellen.

8. Unterfahrschutzeinrichtung (100) nach einem der vorhergehenden Ansprüche, **dadurch gekennzeichnet, dass** der Scherenverstellmechanismus (10) und der Teleskopverstellmechanismus (20) separat betätigt und arretiert werden können, so dass die Unterfahrschutzeinrichtung (100) in andere Stellungen als die Sicherungsstellung und die Freigabestellung verfahren und an diesen arretiert werden kann.

9. Unterfahrschutzeinrichtung (100) nach einem der vorhergehenden Ansprüche, **dadurch gekennzeichnet, dass** der Teleskopverstellmechanismus (20) mit dem mindestens einem Scherenverstellmechanismus (10) kombiniert bzw. integrativ ausgebildet ist, indem ein Halterungsschenkel (14, 16) des Scherenverstellmechanismus (10) ein Langloch (28) aufweist und so als ein Armabschnitt (22, 24) des Teleskopverstellmechanismus (20) dient.

## Claims

1. Underrun protection device (100) for a load transport vehicle, comprising
- an elongate, usually horizontal underrun protection bar (102) for protecting a rear region of the load transport vehicle against another vehicle driving into it or under it, and
- at least one retaining device (104) for fastening the underrun protection bar to the rear end of the vehicle chassis (106) or optionally to the rear end of an attachment part of the load transport vehicle that is rigidly connected to the chassis,
the retaining device (104) comprising an adjustment mechanism (10, 20) in the form of at least one scissor adjustment mechanism (10) comprising two retaining legs (14, 16) connected by a joint (12), such that the underrun protection bar (102) can be moved by an articulated movement of the retaining legs (14, 16) of the scissor adjustment mechanism (10) in order to adjust the underrun protection bar (102) between a protection position blocking the region to be protected and an unblocking position that unblocks the region, the retaining device (104) providing, in addition to the scissor adjustment mechanism (10), at least one additional adjustment mechanism (20) for adjusting the underrun protection bar (102) relative to the vehicle chassis (106), such that the underrun protection bar (102) can be brought close to the rear of the vehicle in a compact manner when being brought into the unblocking position,
the at least one additional adjustment mechanism (20) containing a telescopic adjustment mechanism (20), comprising a first arm portion (22) that is telescopically movable into an extended position and a retracted position relative to the vehicle chassis and/or relative to a second arm portion (24) of the telescopic adjustment mechanism (20), such that the underrun protection bar (102) can be moved by means of a telescopic movement of the first and/or second arm portion (22, 24) of the telescopic adjustment mechanism (20), **characterised in that** the at least one scissor adjustment mechanism (10), together with at least the telescopic adjustment mechanism (20), is mechanically connected in series between the vehicle chassis (106) and the underrun protection bar (102), such that the underrun protection bar (102) is located in the protection position when all the adjustment mechanisms (10, 20) are adjusted to the maximum extent.

2. Underrun protection device (100) according to claim 1, **characterised in that** the underrun protection bar (102) is retained on a telescopic adjustment mechanism (20) of the retaining device (104) or on a scissor adjustment mechanism (10) of the retaining device (104).

3. Underrun protection device (100) according to either of the preceding claims, **characterised in that** the at least one scissor adjustment mechanism (10), together with the telescopic adjustment mechanism (20), is mechanically connected in series between the vehicle chassis (106) and the underrun protection bar (102), such that the underrun protection bar (102) is located in the unblocking position when all the adjustment mechanisms (10, 20) are adjusted to the minimum extent.

4. Underrun protection device (100) according to any of the preceding claims, **characterised in that** retaining devices (104) that are symmetrical to the central axis of the vehicle in the direction of travel, in particular two symmetrical retaining devices (104), are provided.

5. Underrun protection device (100) according to claim 4, **characterised in that** a double-actuation apparatus, which is symmetrical or asymmetrical to the central axis, is arranged between two symmetrical adjustment mechanisms (10, 20) of two symmetrical retaining devices (104) in each case and is intended for manual, motor-driven and/or automatic actuation, in particular parallel actuation of the two symmetrical adjustment mechanisms (10, 20).

6. Underrun protection device (100) according to any of the preceding claims, **characterised in that** the retaining apparatus (104) comprises, for some or all of its adjustment mechanisms (10, 20), one or more actuation apparatuses for the manual, motor-driven and/or automatic actuation of the respective adjustment mechanisms (10, 20), the plurality of adjustment mechanisms or all the adjustment mechanisms.

7. Underrun protection device (100) according to either claim 5 or claim 6, **characterised in that** a controller is provided for actuating a plurality of actuation apparatuses and/or double-actuation apparatuses, preferably for simultaneously actuating all the actuation apparatuses of a retaining apparatus (104) and/or all the double-actuation apparatuses, the controller preferably comprising one or more program sequences that can be activated by the controller, such that when a certain program sequence is selected, the actuation apparatuses and double-actuation apparatuses are actuated in an overlapping and/or non-overlapping manner so as to be coordinated with one another, in particular in order to adjust the underrun protection bar (102) between the protection position blocking the region to be protected and the unblocking position that unblocks the region.

8. Underrun protection device (100) according to any of the preceding claims, **characterised in that** the scissor adjustment mechanism (10) and the telescopic adjustment mechanism (20) can be separately actuated and stopped, such that the underrun protection device (100) can be moved into and stopped in positions other than the protection position and the unblocking position.

9. Underrun protection device (100) according to any of the preceding claims, **characterised in that** the telescopic adjustment mechanism (20) is combined or integrated with the at least one scissor adjustment mechanism (10) by a retaining leg (14, 16) of the scissor adjustment mechanism (10) comprising a slot (28) and thus acting as an arm portion (22, 24) of the telescopic adjustment mechanism (20).

## Revendications

1. Dispositif de protection anti-encastrement (100) pour un véhicule de transport de charges, comprenant
- une barrière de protection anti-encastrement (102) allongée, agencée normalement à l'horizontale pour la protection d'une zone arrière du véhicule de transport de charges contre l'emboutissement ou l'encastrement par un autre véhicule, et
- au moins un dispositif de fixation (104) pour la fixation de la barrière de protection anti-encastrement à l'extrémité arrière du châssis de véhicule (106) ou le cas échéant à l'extrémité arrière d'un élément de carrosserie solidaire du châssis du véhicule de transport de charges,
dans lequel le dispositif de fixation (104) présente un mécanisme de réglage (10, 20) sous la forme d'au moins un mécanisme de réglage à bras articulé (10) comprenant deux branches de fixation (14, 16) reliées par une articulation (12) de sorte que la barrière de protection anti-encastrement (102) est mobile par un mouvement de l'articulation des branches de fixation (14, 16) du mécanisme de réglage à bras articulé (10) pour régler la barrière de protection anti-encastrement (102) entre une position de protection bloquant la zone à protéger et une position de libération libérant la zone, dans lequel le dispositif de fixation (104) offre en plus du mécanisme de réglage à bras articulé (10) au moins un autre mécanisme de réglage (20) pour le réglage de la barrière de protection anti-encastrement (102) par rapport au châssis de véhicule (106) de sorte que la barrière de protection anti-encastrement (102) peut être approchée de manière peu encombrante près de l'arrière du véhicule lors de la mise dans la position de libération,
dans lequel l'au moins un autre mécanisme de réglage (20) contient un mécanisme de réglage télescopique (20) comprenant une première section de bras (22) mobile de manière télescopique dans une position sortie et une position rentrée par rapport au châssis de véhicule et/ou par rapport à une deuxième section de bras (24) du mécanisme de réglage télescopique (20), de sorte que la barrière de protection anti-encastrement (102) est mobile par un mouvement télescopique de la première et/ou deuxième section de bras (22, 24) du mécanisme de réglage télescopique (20), **caractérisé en ce que** l'au moins un mécanisme de réglage à bras articulé (10) est monté en série mécaniquement conjointement avec au moins le mécanisme de réglage télescopique (20) entre le châssis de véhicule (106) et la barrière de protection anti-encastrement (102) de sorte que lors d'un réglage maximum de tous les mécanismes de réglage (10, 20), la barrière de protection anti-encastrement (102) est placée dans la position de protection.

2. Dispositif de protection anti-encastrement (100) selon la revendication 1, **caractérisé en ce que** la barrière de protection anti-encastrement (102) est retenue au niveau d'un mécanisme de réglage télescopique (20) du dispositif de fixation (104) ou d'un mécanisme de réglage à bras articulé (10) du dispositif de fixation (104).

3. Dispositif de protection anti-encastrement (100) selon l'une quelconque des revendications précédentes, **caractérisé en ce que** l'au moins un mécanisme de réglage à bras articulé (10) est monté en série mécaniquement conjointement avec le mécanisme de réglage télescopique (20) entre le châssis de véhicule (106) et la barrière de protection anti-encastrement (102) de sorte que lors d'un réglage minimum de tous les mécanismes de réglage (10, 20), la barrière de protection anti-encastrement (102) est placée dans la position de libération.

4. Dispositif de protection anti-encastrement (100) selon l'une quelconque des revendications précédentes, **caractérisé en ce que** des dispositifs de fixation (104) symétriques par rapport à l'axe médian du véhicule dans le sens de circulation, en particulier deux dispositifs de fixation symétriques (104), sont prévus.

5. Dispositif de protection anti-encastrement (100) selon la revendication 4, **caractérisé en ce qu'**un dispositif à double actionnement non symétrique ou symétrique par rapport à l'axe médian est agencé entre respectivement deux mécanismes de réglage symétriques (10, 20) de deux dispositifs de fixation symétriques (104) pour l'actionnement manuel, mécanique et/ou automatique, en particulier l'actionnement parallèle des deux mécanismes de réglage symétriques (10, 20).

6. Dispositif de protection anti-encastrement (100) selon l'une quelconque des revendications précédentes, **caractérisé en ce que** le dispositif de fixation (104) présente pour quelques-uns ou tous ses mécanismes de réglage (10, 20) un ou plusieurs dispositifs d'actionnement pour l'actionnement manuel, mécanique et/ou automatique du mécanisme de réglage respectif, de plusieurs ou tous les mécanismes de réglage (10, 20).

7. Dispositif de protection anti-encastrement (100) selon la revendication 5 ou 6, **caractérisé en ce qu'**une commande est prévue pour l'actionnement de plusieurs dispositifs d'actionnement et/ou dispositifs à double actionnement, de préférence pour l'actionnement simultané de tous les dispositifs d'actionnement d'un dispositif de fixation (104) et/ou de tous les dispositifs à double actionnement, dans lequel la commande présente de préférence un ou plusieurs déroulements de programme activables par la commande, de sorte que lors de la sélection d'un déroulement de programme déterminé, les dispositifs d'actionnement et dispositifs à double actionnement sont actionnés de manière coordonnée l'un par rapport à l'autre en se chevauchant temporairement et/ou en ne se chevauchant pas, pour régler la barrière de protection anti-encastrement (102) en particulier entre la position de protection bloquant la zone à protéger et la position de libération libérant la zone.

8. Dispositif de protection anti-encastrement (100) selon l'une quelconque des revendications précédentes, **caractérisé en ce que** le mécanisme de réglage à bras articulé (10) et le mécanisme de réglage télescopique (20) peuvent être actionnés et arrêtés séparément, de sorte que le dispositif de protection anti-encastrement (100) peut être déplacé dans d'autres positions que la position de protection et la position de libération et être arrêté au niveau de celles-ci.

9. Dispositif de protection anti-encastrement (100) selon l'une quelconque des revendications précédentes, **caractérisé en ce que** le mécanisme de réglage télescopique (20) est réalisé de manière combinée ou intégrative avec l'au moins un mécanisme de réglage à bras articulé (10), par le fait qu'une branche de fixation (14, 16) du mécanisme de réglage à bras articulé (10) présente un trou oblong (28) et sert ainsi de section de bras (22, 24) du mécanisme de réglage télescopique (20).
